# FASCICULE DE BREVET EUROPEEN

(11) **EP 1 609 639 B1**
(45) Date de publication et mention de la délivrance du brevet: **09.04.2008**
(21) Numéro de dépôt: 05104204.2
(22) Date de dépôt: 18.05.2005
(51) Int. Cl.: B60H 1/00

(54) **Boîtier à étanchéité du type "labyrinthe", pour une installation de chauffage, ventilation et/ou climatisation d'habitacle**
Gehäuse mit Labyrinthdichtung, für eine Heizungs-, Belüftungs- und/oder Klimaanlage eines Innenraums.
Casing with labyrinth-type sealing for a heating, ventilating and/or air conditioning device for a compartment

(30) Priorité: 21.06.2004 FR 0406720
(43) Date de publication de la demande: 28.12.2005
(73) Titulaire: Valeo Systèmes Thermiques, 78321 Le Mesnil St Denis Cedex (FR)
(72) Inventeur: Vincent, Philippe VALEO SYSTEMES THERMIQUES, 28230 EPERNON (FR); Terranova, Gilbert VALEO SYSTEMES THERMIQUES, 78610 LE PERRAY EN YVELINES (FR); Carton, Thomas VALEO SYSTEMES THERMIQUES, 78310 MAUREPAS (FR)

(56) Documents cités:
- EP-A- 1 239 255
- DE-A- 10 242 899
- DE-A- 19 654 776

## Description

L'invention concerne le domaine des installations de chauffage, ventilation et/ou climatisation d'habitacle, notamment de véhicule automobile, et plus précisément les boîtiers de telles installations, destinés à loger un échangeur de chaleur.

Comme le sait l'homme de l'art, en raison des tolérances de fabrication des échangeurs de chaleur, les logements destinés à les recevoir au sein des boîtiers du type précité, sont surdimensionnés. Ce surdimensionnement est particulièrement important lorsque l'échangeur de chaleur est du type dit "à flux en I", c'est-à-dire lorsqu'il comporte deux boîtes à eau séparées l'une de l'autre par un faisceau de tubes dans lesquels un fluide caloporteur circule suivant une unique direction.

En raison de ce surdimensionnement, une partie du flux d'air qui parvient au niveau de la face d'entrée d'un échangeur de chaleur peut pénétrer dans les espaces libres définis entre chaque boîte à eau que comprend l'échangeur de chaleur et les parois du boîtier qui délimitent le logement dans lequel il est installé. Cette partie du flux d'air peut ainsi contourner chaque boîte à eau et venir perturber le flux d'air traité par l'échangeur de chaleur et débouchant par sa face de sortie.

Pour tenter de remédier à cet inconvénient, il a été proposé d'étanchéifier les logements des boîtiers, notamment dans la (ou les) région(s) dans laquelle (ou lesquelles) est (sont) implantée(s) la (ou les) boîte(s) à eau, par exemple au moyen de joints rapportés en mousse (généralement en polyuréthanne (PU)).

Grâce à ces joints une bonne étanchéité peut être assurée à l'état neuf. Cependant, lorsque ces joints rapportés vieillissent, leurs propriétés et performances ont tendance à se dégrader (écrasement, effritement), si bien qu'ils ne sont plus en mesure d'assurer l'étanchéité initiale. Cela se traduit par une perte de puissance thermique et donc une perte de confort thermique à l'intérieur de l'habitacle du véhicule.

Une autre solution au problème de l'étanchéité est divulguée par le document DE 196 54 776, qui est considéré comme l'art antérieur le plus proche, et dans lequel, les parois définissent un trajet de type "labyrinthe" ralentissant le flux d'air.

Par ailleurs, lorsque les boîtes à eau sont situées à l'extérieur du boîtier, leurs tolérances de fabrication et la tolérance liée à l'introduction du faisceau dans les boîtes à eau ne perturbent pas la fixation des échangeurs de chaleur. Mais, lorsqu'une ou deux boîtes à eau sont situées à l'intérieur du boîtier on a une ou deux fois plus de tolérances à prendre en compte.

L'invention a donc pour but d'améliorer la situation, notamment dans le cas d'échangeurs de chaleur à flux en I.

Elle propose à cet effet un boîtier pour le logement, dans une installation de chauffage, ventilation et/ou climatisation, notamment de véhicule automobile, d'un échangeur de chaleur comprenant des faces d'entrée et de sortie d'air, des faces d'extrémité avant et arrière, et au moins une face latérale coiffée d'une boîte à eau, et le boîtier comportant des paroisdélimitant un canal de chauffage dans lequel est implanté l'échangeur de chaleur ainsi que des parois latérales.

comportant des première et/ou seconde parties primaires destinées à être respectivement placées en regard de faces latérales de boîte à eau, sensiblement parallèle à la face d'entrée et/ou de sortie de l'échangeur de chaleur, chaque boîte à eau de l'échangeur de chaleur comprenant sur ses faces latérales des première et/ou seconde parties secondaires faisant saillie, les premières et/ou secondes parties primaires et les premières et/ou secondes parties secondaires correspondantes étant respectivement conformées de manière à définir ensemble un conduit contraignant un flux d'air à changer au moins trois fois de direction, de sorte que la circulation du flux d'air soit limitée dans l'ensemble du conduit.

Ce boîtier se caractérise par le fait que les parois latérales définissent au moins un logement propre à recevoir au moins une partie de boîte à eau, ledit logement étant en partie localisé à l'extérieur du canal de chauffage.

La vitesse du flux d'air au sein de chaque zone de fuite étant notablement ralentie du fait de l'exiguïté des conduits et des multiples changements de direction (induits par l'effet "labyrinthe"), la plus grande partie du flux d'air à traiter, qui présente une vitesse bien plus élevée, est donc contrainte de traverser l'échangeur de chaleur plutôt que de pénétrer dans le labyrinthe, assurant ainsi une étanchéité sensiblement constante dans le temps.

Plusieurs modes de réalisation différents peuvent être envisagés, et notamment:
· seules chaque première partie primaire et chaque première partie secondaire correspondantes peuvent être respectivement conformées afin de définir deux à deux un conduit contraignant le flux d'air à changer au moins trois fois de direction,
· seules chaque seconde partie primaire et chaque seconde partie secondaire correspondantes peuvent être respectivement conformées afin de définir deux à deux un conduit contraignant le flux d'air à changer au moins trois fois de direction,
· chacune des première et seconde parties primaires et chacune des première et seconde parties secondaires correspondantes peuvent être respectivement conformées afin de définir deux à deux un conduit contraignant le flux d'air à changer au moins trois fois de direction,
· les premières et/ou secondes parties primaires peuvent s'étendre sensiblement sur toute la longueur des faces d'entrée et de sortie,
· les premières et/ou secondes parties secondaires peuvent s'étendre sensiblement sur toute la longueur des faces d'entrée et de sortie,
· le boîtier peut comporter une paroi d'extrémité arrière définissant deux logements propres à recevoir chacun une partie d'extrémité arrière de l'une des boîtes à eau. Dans ce cas la partie d'extrémité arrière de chacune des boîtes à eau peut être conformée du côté de la face d'extrémité arrière, et la paroi d'extrémité arrière et chaque partie d'extrémité arrière sont respectivement conformées afin de définir ensemble un conduit contraignant le flux d'air à changer au moins trois fois de direction, de sorte que la circulation du flux d'air soit limitée dans l'ensemble du conduit,
· lorsque les boîtes à eau comprennent chacune un bord périphérique, les premières et/ou secondes parties secondaires et/ou les parties d'extrémité arrière peuvent être des parties saillantes des bords périphériques. Dans ce cas, les parties saillantes des bords périphériques peuvent comprendre une première partie sensiblement perpendiculaire aux faces latérales de boîte à eau et prolongée par une seconde partie sensiblement parallèle aux faces latérales de boîte à eau.

D'autres caractéristiques et avantages de l'invention apparaîtront à l'examen de la description détaillée ci-après, et des dessins annexés, sur lesquels :
· la figure 1 illustre de façon schématique, dans une vue en coupe partielle, une partie d'un exemple de boîtier d'une installation de chauffage, ventilation et/ou climatisation, équipé d'un échangeur de chaleur à flux en I,
· la figure 2 détaille une partie du boîtier de la figure 1, concernée par l'invention,
· la figure 3 illustre de façon schématique, dans une vue en coupe partielle, une variante du boîtier des figures 1 et 2,
· la figure 4 illustre de façon schématique, dans une vue en coupe partielle, une partie d'un second exemple de boîtier d'une installation de chauffage, ventilation et/ou climatisation, équipé d'un échangeur de chaleur à flux en I,
· la figure 5 détaille une partie du boîtier de la figure 4, concernée par l'invention.

Les dessins annexés pourront non seulement servir à compléter l'invention, mais aussi contribuer à sa définition, le cas échéant.

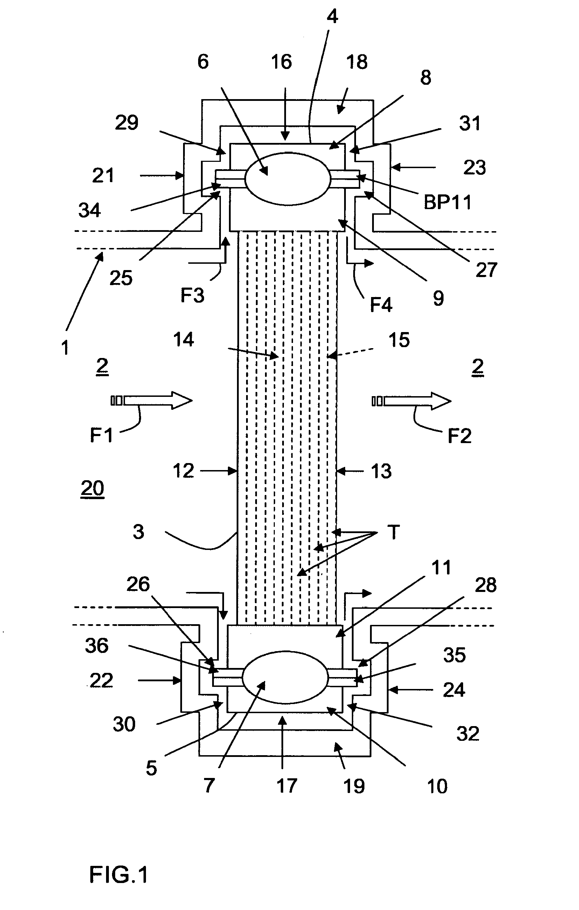

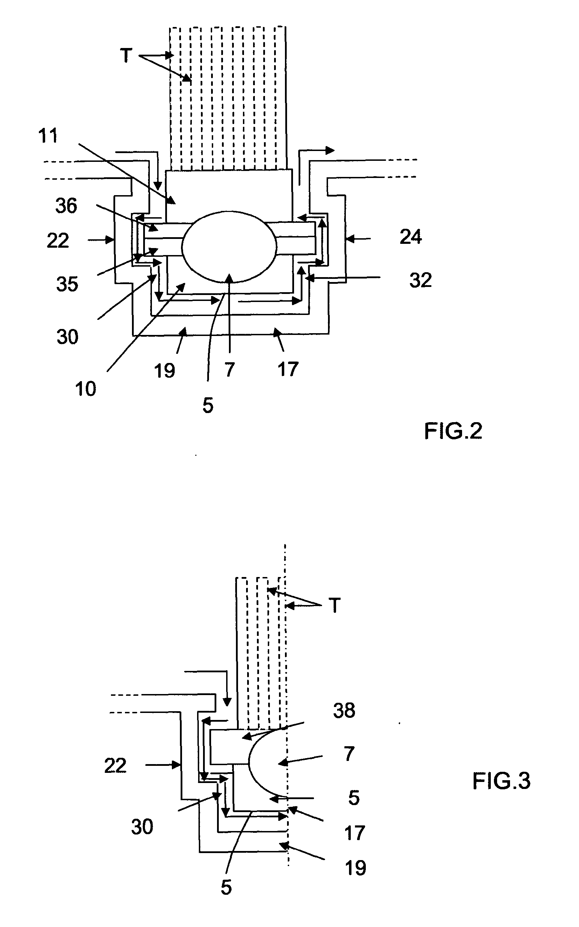

On se réfère tout d'abord aux figures 1 et 2 pour décrire un exemple de réalisation d'un boîtier de traitement de flux d'air 1, selon l'invention, d'une installation de chauffage, ventilation et/ou climatisation, par exemple d'un habitacle de véhicule automobile.

Le boîtier 1 peut être installé dans n'importe quelle partie du véhicule (avant, arrière, ou autre).

Le boîtier 1 (très partiellement illustré) est par exemple destiné à réchauffer un flux d'air provenant de l'extérieur de l'habitacle et/ou de l'intérieur de celui-ci, afin d'alimenter en air chaud l'habitacle du véhicule. Ces parois externes et internes (partiellement représentées) d élimitent à cet effet un canal de chauffage 2 dans lequel est implanté un échangeur de chaleur 3, comme par exemple un radiateur de chauffage à circulation de fluide.

Dans ce qui suit, on considère à titre d'exemple illustratif, que l'échangeur de chaleur 3 est un radiateur à flux en I.

Il est rappelé qu'un radiateur 3 à flux en I comprend deux boîtes à eau 4 et 5 séparées l'une de l'autre par un faisceau de tubes T dans lesquels circule un fluide caloporteur suivant une unique direction. Par conséquent, l'une des boîtes à eau, par exemple 4, comporte une entrée d'alimentation 6, destinée à être raccordée à un circuit externe d'alimentation en fluide caloporteur, et l'autre boîte, par exemple 5, comporte une sortie 7, destinée à être raccordée au circuit externe.

Dans l'exemple illustré sur les figures 1 et 2, chaque boîte à eau est constituée de deux parties complémentaires 8 et 9, d'une part, et 10 et 11, d'autre part. Mais, bien entendu, chaque boîte à eau pourrait être constituée d'une unique partie.

Le radiateur 3 comprend :
· une face d'entrée d'air 12 par laquelle pénètre le flux d'air à traiter (réchauffer) F1,
· une face de sortie d'air 13 par laquelle débouche le flux d'air traité (réchauffé) F2,
· des faces d'extrémité avant 14 et arrière 15 (la figure 1 étant une vue du dessus, la face d'extrémité avant 14 est superposée à la face d'extrémité arrière 15, si bien que cette dernière 15 n'est pas visible),
· une première face latérale 16 (placée perpendiculairement au plan de la feuille contenant la figure 1) coiffée de la première boîte à eau 4 (ici 8 et 9), et
· une seconde face latérale 17 (placée perpendiculairement au plan de la feuille contenant la figure 1) coiffée de la seconde boîte à eau 5 (ici 10 et 11).

Le radiateur 3 est implanté transversalement dans le conduit de chauffage 2 du boîtier 1, les extrémités de ses boîtes à eau 4 et 5, contenant l'entrée d'alimentation 6 et la sortie 7 débouchant à l'extérieur dudit boîtier en vue du raccordement au circuit externe d'alimentation. Dans l'exemple illustré l'entrée d'alimentation 6 et la sortie 7 sont toutes les deux formées au niveau de la face d'extrémité avant 14. Mais cela n'est pas une obligation. L'entrée d'alimentation 6 et/ou la sortie 7 peuvent en effet être formées dans la partie supérieure de la face d'entrée 12 ou de la face de sortie 13, c'est-à-dire quasiment au niveau de la face d'extrémité avant 14.

Afin de permettre l'implantation du radiateur 3 en position transversale, le boîtier 1 comporte des parois latérales 18 et 19 définissant chacune un logement destiné à recevoir une partie au moins de l'une des boîtes à eau 4 et 5. Le radiateur 3 peut ainsi être installé dans le conduit de chauffage 2 en introduisant ses boîtes à eau 4 et 5 dans leurs logements respectifs puis en les translatant jusqu'à ce qu'ils arrivent en butée contre la paroi d'extrémité arrière 20 du boîtier 1, destinée à être placée en regard de sa face d'extrémité arrière 15.

Les logements recevant les boîtes à eau 4 et 5 sont surdimensionnés afin de tenir compte des tolérances de fabrication du radiateur 3. Du fait de ce surdimensionnement, une partie du flux d'air entrant F1 peut pénétrer (flèche F3) dans les espaces libres compris entre les parois latérales 18 et 19 du boîtier 1 et les boîtes à eau 4 et 5.

L'invention propose d'étanchéifier de façon originale et durable dans le temps les espaces libres précités. Pour ce faire, elle propose d'adapter à la fois le boîtier 1 et son radiateur 3.

Plus précisément, chaque paroi latérale 18, 19 est désormais pourvue de première 21, 22 et/ou seconde 23, 24 parties primaires destinées à être respectivement placées en regard d'une face latérale de boîte à eau, sensiblement parallèle à la face d'entrée 12 et/ou la face de sortie 13 du radiateur 3. Ensuite, chaque boîte à eau 4, 5 comprend une première partie secondaire 25, 26 et/ou une seconde partie secondaire 27, 28 respectivement conformées au moins sur ses faces latérales sensiblement parallèles à la face d'entrée 12 et/ou la face de sortie 13 du radiateur 3.

Par ailleurs, chaque première partie primaire 21, 22 et chaque première partie secondaire 25, 26 correspondante, d'une part, et/ou chaque seconde partie primaire 23, 24 et chaque seconde partie secondaire 27, 28 correspondante, d'autre part, sont respectivement conformées de manière à définir ensemble un conduit (29, 30) et/ou (31, 32) contraignant un flux d'air à changer au moins trois fois de direction, afin que la circulation du flux d'air soit limitée dans l'ensemble du conduit, et par conséquent que sa vitesse soit ralentie lors du contournement de la boîte à eau concernée 4, 5.

Dans l'exemple illustré sur les figures 1 et 2, chacune des première 21, 22 et seconde 23, 24 parties primaires et chacune des première 25, 26 et seconde 27, 28 parties secondaires sont conformées comme indiqué ci-dessus. Par conséquent, chaque flux d'air qui pénètre (flèche F3) dans l'espace compris entre la paroi latérale 18 ou 19 et la partie de la boîte à eau 4 ou 5 (du côté de la face d'entrée 12), doit emprunter un premier canal de ralentissement 29 ou 30 (formant un premier "labyrinthe"), puis un second canal de ralentissement 31 ou 32 (formant un second "labyrinthe"), avant de ressortir dans le canal de chauffage 2 du côté de la face de sortie 13 (flèche F4).

Mais, on peut envisager une première variante dans laquelle seules chaque première partie primaire 21, 22 et chaque première partie secondaire 25, 26 correspondante sont conformées comme indiqué ci-dessus (un seul canal 29 ou 30 est alors emprunté par le flux d'air), ainsi qu'une seconde variante dans laquelle seules chaque seconde partie primaire 23, 24 et chaque seconde partie secondaire 27, 28 correspondante sont conformées comme indiqué ci-dessus (un seul canal 31 ou 32 est alors emprunté par le flux d'air).

Les premières 21, 22 et secondes 23, 24 parties primaires et les premières 25, 26 et secondes 27, 28 parties secondaires peuvent présenter de nombreuses configurations différentes aboutissant à la formation des conduits de ralentissement 29, 30 et/ou 31, 32.

Il est avantageux que les premières 25, 26 et secondes 27, 28 parties secondaires soient constituées par un agencement particulier d'un bord périphérique des boîtes à eau 4, 5, et plus précisément d'une partie de ce bord périphérique, située du côté d'une face latérale de la boîte à eau. C'est notamment le cas dans l'exemple illustré sur les figures 1 et 2. En effet, dans cet exemple, chaque boîte à eau 4, 5 est constituée par assemblage de deux parties complémentaires (8, 9), (10, 11), au niveau des bords périphériques (33, 34), (35, 36) qu'elles comprennent respectivement. En prévoyant que l'un au moins des deux bords périphériques de chaque boîte à eau fasse saillie au niveau des faces latérales (sensiblement parallèle à la face d'entrée 12 et/ou de la face de sortie 13, on génère ainsi un obstacle qui contraint le flux d'air à changer plusieurs fois de direction (en coopération avec les premières 21, 22 et secondes 23, 24 parties primaires des parois latérales 18 et 19 du boîtier 1).

Dans l'exemple illustré sur les figures 1 et 2, ce sont les bords périphériques 33 et 34 des parties (complémentaires) 8 et 9 des boîtes à eau qui sont plus spécifiquement conformées. Plus précisément, dans cet exemple les deux bords périphériques (33,34), (35,36) de chaque boîte à eau 4, 5 font saillie de leurs deux faces latérales sur une distance sensiblement identique.

L'épaisseur cumulée, offerte par les parties saillantes des deux bords périphériques de chaque boîte à eau, permet de défléchir efficacement le flux d'air.

Par ailleurs, dans cet exemple les premières 21, 22 et secondes 23, 24 parties primaires sont spécifiquement conformées afin de définir les conduits de ralentissement 29, 30, 31 et 32.

Un tel agencement permet de définir au niveau de chaque boîte à eau 4, 5 deux conduits de ralentissement (29, 31), (30, 32) dans chacun desquels le flux d'air est contraint à changer quatre fois de direction (soit huit changements de direction au niveau de chaque boîte à eau).

Mais de très nombreuses autres conformations peuvent être envisagées. Elles dépendent des formes respectives des premières 21 et 22 et secondes 23 et 24 parties primaires et des premières 25 et 26 et secondes 27 et 28 parties secondaires.

Ainsi, dans l'exemple illustré sur la figure 3, on a représenté une variante de la figure 2 dans laquelle chaque boîte à eau 4, 5 est constituée d'une unique partie munie d'un bord périphérique 37, 38 dont le choix de l'épaisseur peut suffire à défléchir efficacement le flux d'air.

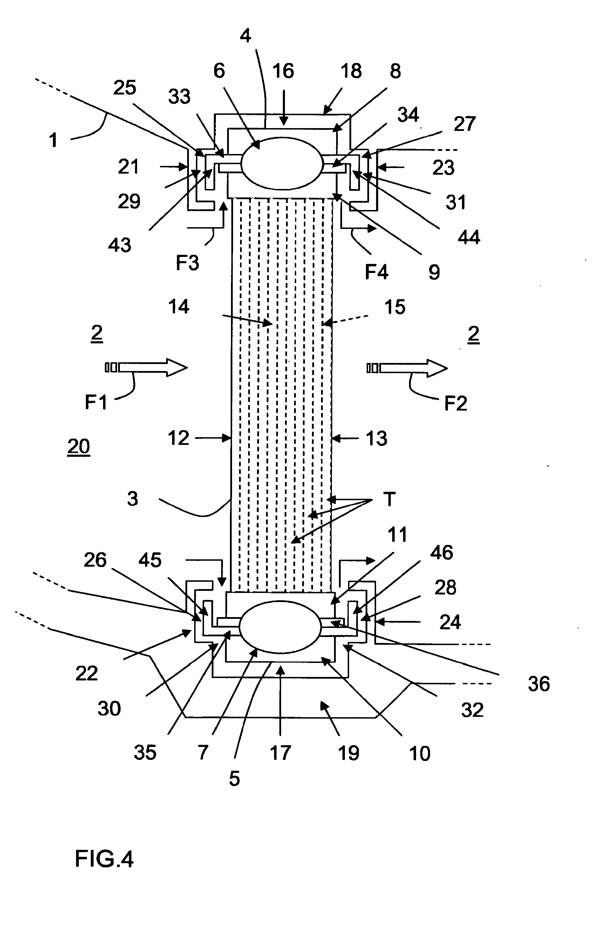

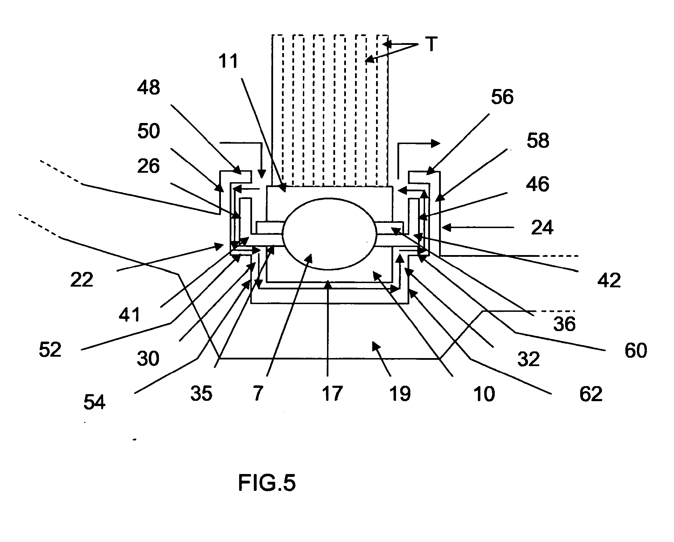

Dans l'exemple illustré sur les figures 4 et 5, chaque bord périphérique 33, 34 comporte une première partie (39, 40), (41, 42), faisant saillie sur une face latérale de boîte à eau sur une certaine distance, sensiblement perpendiculairement au plan contenant les faces d'entrée 12 et de sortie 13, et prolongée par une seconde partie (43, 44), (45, 46) sur une certaine distance et sensiblement parallèlement au plan contenant les faces d'entrée 12 et de sortie 13. Les premières parties 39 et 40 et les secondes parties 43 et 44 ne sont pas référencées sur les figures 4 et 5 pour une raison de place, mais elles équivalent aux premières parties 41 et 42 et aux secondes parties 45 et 46 illustrées sur la figure 5.

Par ailleurs, dans cet exemple les premières 21, 22 et secondes 23, 24 parties primaires sont spécifiquement conformées afin de définir les conduits de ralentissement 29, 30, 31, 32. Plus précisément, chaque première partie primaire 21, 22 comporte une première portion 47, 48 orientée sensiblement perpendiculairement à au plan contenant la face d'entrée 12, une deuxième portion 49, 50 orientée sensiblement perpendiculairement à la première portion 47, 48 et sensiblement en regard de la seconde partie 43, 44 du bord périphérique 33, 35, une troisième portion 51, 52 orientée sensiblement perpendiculairement à la deuxième portion 49, 50 et sensiblement en regard de la première partie 39, 40 du bord périphérique 33, 35, et une quatrième portion 53, 54 orientée sensiblement perpendiculairement à la troisième portion 51, 52. De même, chaque seconde partie primaire 23, 24 comporte une première portion 55, 56 orientée sensiblement perpendiculairement au plan contenant la face de sortie 13, une deuxième portion 57, 58 orientée sensiblement perpendiculairement à la première portion 55, 56 et sensiblement en regard de la seconde partie 44, 46 du bord périphérique 33, 35, une troisième portion 59, 60 orientée sensiblement perpendiculairement à la deuxième portion 57, 58 et sensiblement en regard de la première partie 40, 42 du bord périphérique 33, 35, et une quatrième portion 61, 62 orientée sensiblement perpendiculairement à la troisième portion 59, 60.

Un tel agencement permet également de définir au niveau de chaque boîte à eau 4, 5 deux conduits de ralentissement (29, 30), (31, 32) dans chacun desquels le flux d'air est contraint à changer quatre fois de direction (soit huit changements de direction au niveau de chaque boîte à eau).

Afin d'optimiser l'étanchéité, il est préférable, d'une part, que les premières 21 et 22 et/ou secondes 23 et 24 parties primaires s'étendent sensiblement sur toute la longueur des faces d'entrée 12 et de sortie 13, c'est-à-dire sensiblement entre les faces d'extrémité arrière 15 et avant 14, et d'autre part, que les premières 25 et 26 et/ou secondes 27 et 28 parties secondaires s'étendent sensiblement sur toute la longueur des faces d'entrée 12 et de sortie 13. Mais cela n'est pas obligatoire. Par exemple, seules les premières parties primaires et secondaires peuvent s'étendre sensiblement sur toute la longueur des faces d'entrée 12 et de sortie 13, ou bien seules les secondes parties primaires et secondaires peuvent s'étendre sensiblement sur toute la longueur des faces d'entrée 12 et de sortie 13. Il est également possible d'envisager des extensions complètes sur toute la longueur pour les unes et des extensions partielles pour les autres.

Afin de renforcer encore l'étanchéité, on peut également envisager d'appliquer le principe de l'invention non seulement au niveau des parties des boîtes à eau 4 et 5 situées au niveau des faces d'entrée 12 et/ou de sortie 13, mais également au niveau de la face d'extrémité arrière 15. Dans ce cas (non illustré), d'une part, le boîtier 1 doit comporter une paroi d'extrémité arrière 20 définissant deux logements destinés à recevoir chacun la partie d'extrémité arrière de l'une des boîtes à eau 4 et 5 (opposée à l'extrémité comportant l'entrée d'alimentation 6 ou la sortie 7), et d'autre part, la partie d'extrémité arrière de chacune des boîtes à eau 4, 5 doit être conformée du côté de la face d'extrémité arrière 15. La paroi d'extrémité arrière 20 et chaque partie d'extrémité arrière sont alors respectivement conformées de manière à définir ensemble un conduit de ralentissement supplémentaire contraignant le flux d'air à changer au moins trois fois de direction, de sorte que sa vitesse soit ralentie en contournant la boîte à eau concernée 4, 5.

L'invention ne se limite pas aux modes de réalisation de boîtier et d'échangeur de chaleur décrits ci-avant, seulement à titre d'exemple, mais elle englobe toutes les variantes que pourra envisager l'homme de l'art dans le cadre des revendications ci-après.

Ainsi, dans ce qui précède on a décrit des exemples de boîtiers destinés à loger des échangeurs de chaleur comportant deux boîtes à eau. Mais, l'invention s'applique également aux situations dans lesquelles l'échangeur de chaleur ne comporte qu'une seule boîte à eau.

## Revendications

1. Boîtier (1) pour le logement, dans une installation de chauffage, ventilation et/ou climatisation, d'un échangeur de chaleur (3), comprenant une face d'entrée d'air (12), une face de sortie d'air (13), une face d'extrémité arrière (15), une face d'extrémité avant (14), et au moins une face latérale (16, 17) coiffée d'une boîte à eau (4,5), ledit boîtier (1) comportant des parois délimitant un canal de chauffage (2) propre à recevoir l'échangeur de chaleur (3) ainsi que des parois latérales (18, 19) comportant des première (21, 22) et/ou seconde (23, 24) parties primaires destinées à être respectivement placées en regard de faces latérales de boîte à eau, sensiblement parallèle à la face d'entrée (12) et/ou de sortie (13), chaque boîte à eau (4, 5) comprenant sur ses faces latérales des première (25, 26) et seconde (27, 28) parties secondaires faisant saillie, lesdites premières et/ou secondes parties primaires et lesdites premières et/ou secondes parties secondaires correspondantes étant respectivement conformées de manière à définir ensemble, lorsque échangeur de chaleur (3) est monté, un conduit (29, 30; 31,32) contraignant un flux d'air à changer au moins trois fois de direction, de sorte que la circulation dudit flux d'air soit limitée dans l'ensemble dudit conduit (29, 30; 31,32), **caractérisé en ce que** les parois latérales (18,19) définissent au moins un logement propre à recevoir au moins une partie de boîte à eau (4,5), ledit logement étant en partie localisé à l'extérieur du canal de chauffage (2).

2. Boîtier selon la revendication 1, **caractérisé en ce que** chaque première partie primaire (21, 22) et chaque première partie secondaire (25, 26) correspondantes sont respectivement conformées de manière à définir deux à deux un conduit (29, 30) contraignant ledit flux d'air à changer au moins trois fois de direction.

3. Boîtier selon l'une des revendications 1 et 2, **caractérisé en ce que** chaque seconde partie primaire (23, 24) et chaque seconde partie secondaire (27, 28) correspondantes sont respectivement conformées de manière à définir deux à deux un conduit (31, 32) contraignant ledit flux d'air à changer au moins trois fois de direction.

4. Boîtier selon la revendication 1, **caractérisé en ce que** chacune desdites première (21, 22) et seconde (23, 24) parties primaires et chacune desdites première (25, 26) et seconde (27, 28) parties secondaires correspondantes sont respectivement conformées de manière à définir deux à deux un conduit (29, 30, 31,32) contraignant un flux d'air à changer au moins trois fois de direction.

5. Boîtier selon l'une des revendications 1 à 4, **caractérisé en ce que** lesdites premières (21, 22) et/ou secondes (23, 24) parties primaires s'étendent sensiblement sur toute la longueur desdites faces d'entrée (12) et de sortie (13).

6. Boîtier selon l'une des revendications 1 à 5, **caractérisé en ce que** lesdites premières (25, 26) et/ou secondes (27, 28) parties secondaires s'étendent sensiblement sur toute la longueur desdites faces d'entrée (12) et de sortie (13).

7. Boîtier selon l'une des revendications 1 à 6, **caractérisé en ce qu**'il comporte une paroi d'extrémité arrière (20) définissant deux logements propres à recevoir chacun une partie d'extrémité arrière de l'une desdites boîtes à eau (4, 5), et en ce que ladite partie d'extrémité arrière de chacune desdites boîtes à eau est conformée du côté de ladite face d'extrémité arrière (15), ladite paroi d'extrémité arrière (20) et chaque partie d'extrémité arrière étant respectivement conformées de manière à définir ensemble un conduit contraignant ledit flux d'air à changer au moins trois fois de direction, de sorte que la circulation du flux d'air soit limitée dans l'ensemble du conduit.

8. Boîtier selon la revendication 7, **caractérisé en ce que** lesdites boîtes à eau (4, 5) comportent chacune au moins un bord périphérique (33, 34; 35, 36), et **en ce que** lesdites premières (25, 26) et/ou secondes (27, 28) parties secondaires et/ou lesdites parties d'extrémité arrière sont des parties saillantes (39, 40, 41, 42; 43, 44, 45, 46) desdits bords périphériques (33, 34; 35, 36).

9. Boîtier selon la revendication 8, **caractérisé en ce que** lesdites parties saillantes desdits bords périphériques (33, 34; 35, 36) comprennent une première partie (39, 40, 41, 42) sensiblement perpendiculaire auxdites faces latérales de boîte à eau et prolongée par une seconde partie (43, 44, 45, 46) sensiblement parallèle auxdites faces latérales de boîte à eau.

## Claims

1. Cover (1) for housing, within a heating, ventilation and/or air conditioning installation, a heat exchanger (3) comprising one air entry side (12), one air by-pass (13), one rear end side (15), one front end side (14), and at least one lateral side (16, 17) covered by a header tank (4, 5), said cover (1) comprising walls delimiting a heating canal (2) suitable for receiving the heat exchanger (3) as well as the lateral walls (18, 19) comprising the first (21, 22) and/or second (23, 24) primary components designed for being respectively positioned opposite the lateral sides of the header tank (4, 5), substantially parallel to the inlet side (12) and/or the exit side (13), each header tank (4, 5) comprising on its lateral sides the first (25, 26) and second (27, 28) secondary projecting components, said first and/or second primary components and said corresponding first and/or second secondary components being respectively conformed in a manner so as to define together, when the heat exchanger (3) is installed, a canal (29, 30; 31, 32) forcing a flow of air to change direction at least three times in such a manner that said flow of air is limited in the ensemble of said canal (29, 30; 31, 32), **characterised in that** the lateral walls (18, 19) define at least one housing suitable for receiving at least one portion of the header tank (4, 5), said housing being in part located on the exterior of the heating canal (2).

2. Cover as claimed in claim 1, **characterised in that** each first primary component (21, 22) and each corresponding secondary primary component (25, 26) are respectively conformed in a manner so as to define, two by two, a canal (29, 30) forcing said flow of air to change direction at least three times.

3. Cover as claimed in claims 1 and 2, **characterised in that** each second primary component (23, 24) and each corresponding second secondary component (27, 28) are respectively conformed in a manner so as to define, two by two, a canal (31, 32) forcing said flow of air to change direction at least three times.

4. Cover as claimed in claim 1, **characterised in that** each of said first (21, 22) and second (23, 24) primary components and each of said corresponding first (25, 26) and second (27, 28) secondary components are respectively conformed in such a manner so as to define, two by two, a canal (29, 30, 31, 32) forcing a flow of air to change direction at least three times.

5. Cover as claimed in one of claims 1 to 4, **characterised in that** said first (21, 22) and/or second (23, 24) primary components substantially extend across the entirety of the length of said entry (12) and exit (13) sides.

6. Cover as claimed in one of claims 1 to 5, **characterised in that** said first (25, 26) and/or second (27, 28) secondary components substantially extend across the entirety of the length of said entry (12) and exit (13) sides.

7. Cover as claimed in one of claims 1 to 6, **characterised in that** it comprises a rear end wall (20) defining two housings each suitable for receiving one rear end portion of one of said header tanks (4, 5), and furthermore **characterised in that** said rear end portion of each of said header tanks is conformed on the side of said rear end side (15), said rear end wall (20), and each rear end portion being respectively conformed in a manner so as to define together a canal forcing said flow of air to change direction at least three times in such a manner that the circulation of the flow of air is limited in the ensemble of the canal.

8. Cover as claimed in claim 7, **characterised in that** said header tanks (4, 5) each comprise at least one peripheral panel (33, 34; 35, 36), and furthermore **characterised in that** said first (25, 26) and/or second (27, 28) secondary components and/or said rear end portions are projecting components (39, 40, 41, 42; 43, 44, 45, 46) of said peripheral panels (33, 34; 35, 36).

9. Cover as claimed in claim 8, **characterised in that** said projecting components of said peripheral panels (33, 34; 35, 36) comprise a first portion (39, 40, 41, 42) substantially perpendicular to said lateral sides of the header tank and extended by a second portion (43, 44, 45, 46) substantially parallel to said lateral sides of the header tank.

## Patentansprüche

1. Gehäuse (1) für die Aufnahme eines Wärmeaustauschers (3) in einer Heizungs-, Belüftungs- und/oder Klimatisierungsanlage, umfassend eine Lufteintrittsfläche (12), eine Luftaustrittsfläche (13), eine hintere Endfläche (15), eine vordere Endfläche (14) und zumindest eine Seitenfläche (16, 17), die mit einem Wasserkasten (4, 5) bedeckt ist, wobei das besagte Gehäuse (1) Wände umfasst, die einen Heizungskanal (2) begrenzen, der dazu dient, den Wärmeaustauscher (3) aufzunehmen, sowie Seitenwände (18, 19), die erste (21, 22) und/oder zweite (23, 24) Primärkomponenten umfassen, die dazu bestimmt sind, jeweils gegenüber den Seitenflächen des Wasserkastens angeordnet zu sein, und zwar im Wesentlichen parallel zur Eintritts- (12) und/oder Austrittsfläche (13), wobei jeder Wasserkasten (4, 5) auf seinen Seitenflächen erste (25, 26) und/oder zweite (27, 28) vorstehende Sekundärkomponenten umfasst, wobei die besagten ersten und/oder zweiten Primärkomponenten und die besagten entsprechenden ersten und/oder zweiten Sekundärkomponenten jeweils so angepasst sind, dass sie zusammen, sobald der Wärmeaustauscher (3) montiert ist, eine Leitung (29, 30; 31, 32) definieren, die einen Luftstrom zwingt, mindestens drei Mal die Richtung zu ändern, so dass die Durchströmung des besagten Luftstroms in der gesamten Leitung (29, 30; 31, 32) eingeschränkt ist, **dadurch gekennzeichnet, dass** die Seitenwände (18, 19) zumindest eine Aufnahme definieren, die dazu dient, zumindest einen Teil des Wasserkastens (4, 5) aufzunehmen, wobei sich die besagte Aufnahme zum Teil außerhalb des Heizungskanals (2) befindet.

2. Gehäuse nach Anspruch 1, **dadurch gekennzeichnet, dass** jede erste Primärkomponente (21, 22) und jede entsprechende erste Sekundärkomponente (25, 26) jeweils so angepasst sind, dass sie paarweise eine Leitung (29, 30) definieren, die den besagten Luftstrom zwingt, mindestens drei Mal die Richtung zu ändern.

3. Gehäuse nach einem der Ansprüche 1 und 2, **dadurch gekennzeichnet, dass** jede zweite Primärkomponente (23, 24) und jede entsprechende zweite Sekundärkomponente (27, 28) jeweils so angepasst sind, dass sie paarweise eine Leitung (31, 32) definieren, die den besagten Luftstrom zwingt, mindestens drei Mal die Richtung zu ändern.

4. Gehäuse nach Anspruch 1, **dadurch gekennzeichnet, dass** jede der besagten ersten (21, 22) und zweiten (23, 24) Primärkomponenten und jede der besagten entsprechenden ersten (25, 26) und zweiten (27, 28) Sekundärkomponenten jeweils so angepasst sind, dass sie paarweise eine Leitung (29, 30, 31, 32) definieren, die einen Luftstrom zwingt, mindestens drei Mal die Richtung zu ändern.

5. Gehäuse nach einem der Ansprüche 1 bis 4, **dadurch gekennzeichnet, dass** sich die besagten ersten (21, 22) und/oder zweiten (23, 24) Primärkomponenten im Wesentlichen über die gesamte Länge der besagten Eintritts- (12) und Austrittsflächen (13) erstrecken.

6. Gehäuse nach einem der Ansprüche 1 bis 5, **dadurch gekennzeichnet, dass** sich die besagten ersten (25, 26) und/oder zweiten (27, 28) Sekundärkomponenten im Wesentlichen über die gesamte Länge der besagten Eintritts- (12) und Austrittsflächen (13) erstrecken.

7. Gehäuse nach einem der Ansprüche 1 bis 6, **dadurch gekennzeichnet, dass** es eine hintere Endwand (20) umfasst, die zwei Aufnahmen definiert, die dazu dienen, jeweils einen Teil des hinteren Endes von einem der besagten Wasserkästen (4, 5) aufzunehmen, und **dadurch**, dass der besagte Teil des hinteren Endes von jedem der besagten Wasserkästen auf Seite der besagten hinteren Endfläche (15) angepasst ist, wobei die besagte hintere Endwand (20) und jeder Teil des hinteren Endes jeweils so angepasst sind, dass sie zusammen eine Leitung definieren, die den besagten Luftstrom zwingt, mindestens drei Mal die Richtung zu ändern, so dass die Durchströmung des Luftstroms in der gesamten Leitung eingeschränkt ist.

8. Gehäuse nach Anspruch 7, **dadurch gekennzeichnet, dass** die besagten Wasserkästen (4, 5) jeweils mindestens einen peripheren Rand (33, 34; 35, 36) umfassen, und **dadurch**, dass die besagten ersten (25, 26) und/oder zweiten (27, 28) Sekundärkomponenten und/oder die besagten Teile des hinteren Endes vorstehende Komponenten (39, 40, 41, 42; 43, 44, 45, 46) der besagten peripheren Ränder (33, 34; 35, 36) sind.

9. Gehäuse nach Anspruch 8, **dadurch gekennzeichnet, dass** die besagten vorstehenden Komponenten der besagten peripheren Ränder (33, 34; 35, 36) einen ersten Teil (39, 40, 41, 42) umfassen, der im Wesentlichen senkrecht zu den besagten Seitenflächen des Wasserkastens verläuft und von einem zweiten Teil (43, 44, 45, 46) verlängert wird, der im Wesentlichen parallel zu den besagten Seitenflächen des Wasserkastens verläuft.
